(19) Europäisches Patentamt / European Patent Office / Office européen des brevets

(11) **EP 2 873 648 B1**

(12) **EUROPEAN PATENT SPECIFICATION**

(45) Date of publication and mention
of the grant of the patent:
**05.01.2022 Bulletin 2022/01**

(51) Int Cl.:
*C02F 1/20* [(2006.01)]     *C02F 1/70* [(2006.01)]
*C02F 1/46* [(2006.01)]     *B01D 19/00* [(2006.01)]
*C02F 1/461* [(2006.01)]

(21) Application number: **13192781.6**

(22) Date of filing: **13.11.2013**

(54) **Dissolved oxygen removal system, circulating water system with dissolved oxygen removal device, heating device comprising said circulating water circuit system and dissolved oxygen removal method**

System zum Entfernen von gelöstem Sauerstoff, Vorrichtung zum Entfernen von gelöstem Sauerstoff in einem System mit umlaufendem Wasser, Heizvorrichtung mit dem Kreislaufsystem mit umlaufendem Wasser und Verfahren zum Entfernen von gelöstem Sauerstoff

Système d'élimination d'oxygène dissous, système de circulation d'eau avec dispositif d'élimination d'oxygène dissous, dispositif de chauffage comprenant ledit système de circuit d'eau de circulation et procédé d'élimination d'oxygène dissous

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.05.2015 Bulletin 2015/21**

(73) Proprietors:
• **Mitsubishi Electric Corporation**
**Chiyoda-ku**
**Tokyo 100-8310 (JP)**
• **Mitsubishi Electric R&D Centre Europe B.V.**
**Livingston EH54 5DJ (GB)**

(72) Inventors:
• **BRAHIM, Messaoudi**
**Livingston, EH54 5DJ (GB)**
• **KAWALEY, Georgeanna**
**Livingston, EH54 5DJ (GB)**

(74) Representative: **Pfenning, Meinig & Partner mbB
Patent- und Rechtsanwälte
Theresienhöhe 11a
80339 München (DE)**

(56) References cited:
WO-A1-2012/134350     DE-A1- 4 008 112
GB-A- 2 283 015         US-A- 4 789 488
US-A- 5 407 468

• **SUN B ET AL: "Non-uniform pulse
discharge-induced radical production in distilled
water", JOURNAL OF ELECTROSTATICS,
ELSEVIER SCIENCE PUBLISHERS B.V.
AMSTERDAM, NL, vol. 43, no. 2, 2 April 1998
(1998-04-02), pages 115-126, XP004117231, ISSN:
0304-3886, DOI: 10.1016/S0304-3886(97)00166-6**

**Description**

The present invention relates to a dissolved oxygen removal system, to a circulating water circuit system with a dissolved oxygen removal device comprising such a dissolved oxygen removal system, to a heating device, such as a heat pump for example, with such a circulating water circuit system and to a method for removing dissolved oxygen. Specifically, the present invention can be implemented in a hot water recirculating (or re-circulated) water circuit system. For example, it can be used as part of a heating circuit involving a heat pump used for space heating and/or for hot water production.

In domestic recirculating water circuit systems of heating and ventilation systems such as heat pumps for example, dissolved oxygen is a major problem related to both corrosion and scale deposition in the hot water parts of the circuit. In view of corrosion mechanisms, both iron and copper elements can be subjected to corrosion as can be seen from the following two chemical reactions.

Iron Corrosion:

$$2Fe + 2H_2O + O_2 = 2Fe(OH)_2$$

Copper Corrosion:

$$3Cu + H_2O + O_2 = 3CuO + H_2$$

The reaction rates of the shown chemical reactions may be influenced (enhanced and/or delayed) by the water quality and the operation temperature.

As for scale formation, the presence of dissolved oxygen can enhance the calcium carbonate reaction as shown in the following reactions.

Calcium Carbonate Deposition:

$$H_2O \rightarrow 2H^+ + \tfrac{1}{2}\,O_2 + 2e^-$$

$$2H^+ + 2O_2 + 2e^- \rightarrow 2OH^-$$

$$Ca^{2+} + HCO_3^- + OH^- \rightarrow CaCO_3 + H_2O$$

Regarding the formation of silicate scale, the essential reactions are as follows.

Silicate Deposition:

$$H_2O \rightarrow 2H^+ + \tfrac{1}{2}\,O_2 + 2e^-$$

$$2H^+ + 2O_2 + 2e^- \rightarrow 2OH^-$$

$$Si(OH)_4 + OH^- \rightarrow (OH)_3SiO^- + H_2O$$

$$Si(OH)_3^- + Si(OH)_4 \rightarrow (OH)_3Si\text{-}O\text{-}Si(OH)_3 + OH^-$$

The problem of dissolved oxygen has been the subject of several investigations consisting of either a chemical or a physical approach. A physical dissolved oxygen removal is for example described in CA 2 308 744 C. A chemical dissolved oxygen removal process is for example described in US 5,244,600. A physical dissolved oxygen removal process can use steam stripping or nitrogen purging.

The chemical removal process can add reducing chemical reagents such as hydrogen or sodium sulphite to water to enhance the oxygen removal.

The process efficiency in the prior art is relatively limited due to the usage of membranes, especially of fibre membranes, for the dissolution of gas in water and/or its removal from water.

US4789488 is an example of the prior art that describes a dissolved oxygen removal system for removing dissolved oxygen from water containing dissolved oxygen, comprising means for gas-liquid contact configured to dissolve a reducing agent in said water containing dissolved oxygen.

It is therefore the object of the present invention to provide systems and methods which allow an efficient and reliable removal of dissolved oxygen from water, especially from hot water in circulating water circuit systems such as the recirculating water circuit system of a heating device (especially: a heat pump) used for space heating and/or for generation of hot water. It is therefore also the object of the present invention to provide such systems and/or methods in which corrosion of parts in contact with water (such as for example heat emitters and heat exchangers) is prevented or at least reduced and in which calcium carbonate and/or silicate based scale deposition is prevented or at least reduced.

These objectives of the present invention are achieved by the dissolved oxygen removal system according to claim 1, by the circulating water circuit system according to claim 8 and by the devices according to claim 12. The dependent claims describe advantageous system and/or device configurations. Hereinafter, the present invention is at first described in a general way followed by specific, exemplary embodiments. It is important to note that the configuration shown in the exemplary embodiments does not need to be realized, within the scope of the appended claims, in exactly the shown form: Single elements and/or method steps described in the exemplary embodiments can also be omitted or combined (with other elements and/or steps within other embodiments) in a different way without departing from the scope of the present invention as described by the appended claims.

In general, according to the present invention, the removal of dissolved oxygen can be achieved according to the following: generating a reducing agent (generating hydrogen via water electrolysis), dissolving this reducing agent in dissolved oxygen containing water (especially: hot water) by using an efficient dissolving system which can be based on a direct gas-liquid contact by use of an efficient gas-liquid contactor in the form of a microchannel contactor for example; generating oxygen radicals through an electrical discharge (such as a corona discharge) in water and preferably also efficiently removing (for example: direct vacuum removal) the/ any unreacted reducing agent from the water. In this way, the reducing agent is efficiently dissolved in water without any additional membrane resistance so that a very quick reaction with unstable oxygen radicals generated by the electrical discharge can occur in a very short time period leading to a high efficiency of the combined operations for the production of reduced oxygen / oxygen free water and consumption of the target dissolved oxygen in the system according to the invention.

The unreacted reducing agent (any remaining reducing agent which does not react with the oxygen radicals) in the circuit can be subjected to removal from the water (for example via gas-liquid separation). This can be done in a combined device unifying a gas-liquid microchannel contactor and an electrical discharging device in one single device and apparatus, respectively. However, a separate separation device (for example: a gas-liquid contactor such as a separation column for example) of a high gas performance can also be used in order to separate the unreacted reducing agent from the water.

Alternatively, the process can be controlled in a way that allows the reducing agent hydrogen to be generated without excess as this will allow for total consumption by the oxygen radicals and avoid the need for any additional system for the removal of unreacted reducing agent. In order to achieve this, it is for example possible to generate the oxygen radicals in excess, so that any amount of unreacted reducing agent is surely consumed by the generated oxygen radicals. This allows for configuration of the oxygen removal system in a very compact manner: In this case, especially, no vacuum-based removal of unreacted reducing agent is necessary so that no vacuum pump is needed.

A dissolved oxygen removal system according to the invention is described in independent claim 1.

The gas-liquid contactor means is preferably a microchannel contactor and preferably configured for an efficient injection of the reducing agent in gaseous form into the water containing the dissolved oxygen and for an efficient absorption of said reducing agent gas in the water. Differently shaped microchannel configurations of the gas-liquid microchannel contactor means are possible, wherein "microchannel configuration" means that the dimension (for example: the transverse cross-section) of the microchannels and/or the distance of opposite walls limiting such microchannels is/are in general 1 mm or below, preferably 0.5 mm or below. Preferably, the microchannels can be configured (in the preferable, integrated configuration of the system, see hereinafter) as the interspace between adjacent, essentially plate-shaped electrodes of the electrical discharging means for example.

Therefore, especially gas-liquid contactors which allow a direct gas-liquid contact can be used. A direct gas-liquid contact means that the reducing agent gas is introduced (especially: injected) straight into the water, resulting in a gas microbubble-water intimate contact, i.e. without any intermediate medium such as a membrane or the like, and hence an efficient dissolution of gas (such as hydrogen) in water without any additional membrane resistance is realized.

An optimized gas-liquid microchannel contactor means which can be used is described hereinafter. Nevertheless, a direct gas-liquid contactor which can, in principle, also be used as the gas-liquid contactor of claim 1 is described in "Hydrodynamics and mass transfer characteristics in gas-liquid flow through a rectangular microchannel" by J. Yue et. al. in Chemical Engineering Science 62 (2007) 2096-2108 (compare the "gas-liquid microchannel contactor of this study" mentioned in table 2). (The basic operation principles of gas-liquid contactors are described in "Mass transfer characteristics of a novel gas-liquid contactor, the advanced buss loop reactor", dissertation submitted to Swiss Federal Institute of Technology Zürich, of F.O. Baier, Zurich, 2001.)

Said electrical discharging means can be configured to generate oxygen radicals by corona discharge for example, or similar electrical discharge processes, in said dissolved oxygen containing water in which said reducing agent has been dissolved, and the reducing agent is then consumed by the oxygen radicals generated. A corona-based electrical discharging means which can be used is described in "The Study of Atomic Oxygen produced by a pulsed Streamer Corona Discharge in Water" by B. Sun et al., AP-AWTGORT 2006 or in "Decomposition of Methylene Blue by the Plasma Discharge in Water solution - Discharge Mode and Catalyst Effect", Master Thesis by Takuya Banno, Tokyo Univ. Elec. Eng. Dept. 2013. Instead of the corona discharging means, a streamer device or a spark device or any one of their possible combinations can also be used.

In a dissolved oxygen removal method for removing dissolved oxygen from water containing dissolved oxygen, a reducing agent (such as hydrogen) is dissolved in said water containing the dissolved oxygen by a (preferably direct) microchannel-based gas-liquid contact and, afterwards, oxygen radicals are generated in said dissolved oxygen containing water (in which said reducing agent has not yet been dissolved and/or has already been dissolved) by an electrical discharge such as a corona discharge or other means of similar discharge effect.

Integrated device in general means that all functions, here, both functions of dissolving the reducing agent and of generating the oxygen radicals, are performed in the same unit (i.e. preferably in the same housing) and/or by using one or more components of the device for at least two of the functions.

Preferably, a high voltage (potential difference) between 10 kV and 100 kV for example, is applied. Narrow gap configuration means that a plurality of electrodes (the number of which depends mainly on the water flowrate and the concentration of dissolved oxygen to be removed) are pairwise arranged in such a manner that immediately adjacent electrodes (wherein one electrode thereof, in general, is connected to earth and to the other electrode thereof, in general, said high voltage is applied) have a gap in between with a gap width of between 0.5 mm and 10 mm, preferably between 1 mm and 5 mm. Preferably, the electrodes are configured as plate-shaped electrodes arranged in parallel.

Also the reducing agent removal means can be configured in such a way that there is no additional membrane resistance for the removal of the reducing agent gas from the liquid (water) containing said unreacted reducing agent.

Alternatively, the usage of three separate devices (especially within different housings) for the three functions of dissolving, generating and removing, wherein the three separate devices are consecutively connected, is also possible (i.e. of a gas-liquid microchannel contactor device upstream of an electrical discharging device upstream of a reducing agent removing device, wherein the three devices are pairwise connected by water pipes).

Preferably, the integrated device is configured as a through-flow device for water as well as for the gaseous reducing agent, wherein the water flows from an upper inlet on one side of the device to a lower outlet on another, opposite side of the device (preferably around the electrodes) and wherein the gaseous reducing agent flows in and through the water from the lower part of the device to the upper part of the device (preferably in the gaps between adjacent ones of the pairwise arranged electrodes).

However, a configuration realizing a co-current flow of the water and of the reducing agent for absorption of the reducing agent in the water could also be possible.

Preferably, said reducing agent removal means is configured to remove any unreacted hydrogen from said dissolved oxygen containing water in which said hydrogen has been dissolved and in which said oxygen radicals have been generated.

The reducing agent is hydrogen because there will be no harmful chemical substances remaining after the removal of the unreacted hydrogen from the system. Based on hydrogen as the reducing agent, the dissolved oxygen (in the form of the already generated oxygen radicals $O^*$) can be removed with the dissolved hydrogen as follows: $O^* + H_2 \rightarrow H_2O$.

However, it is not necessary to use hydrogen as the reducing agent if toxicity is not an essential aspect. For example, hydrazine ($N_2H_4$) can be used as reducing agent so that the dissolved oxygen in the water can be removed according to: $N_2H_4 + O_2 \rightarrow N_2 + 2H_2O$. Also, sodium sulphite ($Na_2SO_3$) can be used as reducing agent.

A circulating water circuit system according to the invention which comprises an oxygen removal system according to the invention in a dissolved oxygen removal device of the circulating water circuit system is described in claim 8.

Therein, a vacuum generating device can be provided for generating a vacuum for removing unreacted reducing agent from said dissolved oxygen removal device. Preferably, the vacuum generating device is a vacuum pump. However, if the circulating water circuit system is configured such that the electrical discharging means of the dissolved oxygen removal system generates an amount of oxygen radicals $O^*$ which consumes the total amount of reducing agent dissolved (by the gas-liquid contactor means of the dissolved oxygen removal system) in said water containing dissolved oxygen, then no generation and application of vacuum is necessary so that a very compact system configuration is possible.

Therein, for controlled and/or intermittent removal, the system preferably further comprises a water through-flow pipe comprising a bypass pipe, wherein the dissolved oxygen removal device is arranged in said bypass pipe of the water through-flow pipe. The circulating water circuit system can then be configured to start and/or to sustain a removal of dissolved oxygen (based on the operations proposed in the present invention, which are preferably realized as combined, i.e. integrated operations) from the water circulating in the circulating water circuit system by switching the flow of water in the water through-flow pipe over to the bypass pipe and/or by letting the water flow through the bypass pipe of the water through-flow pipe.

Preferably, for controlled and/or intermittent removal, the circulating water circuit system can be configured to compare the physical and/or chemical quantity/quantities monitored by the oxygen monitoring device with one or more set value(s). The circulating water circuit system can be configured to start and/or to sustain said removal of dissolved oxygen (based on the operations proposed in the present invention, which are preferably realized as combined, i.e.

integrated operations) from the water circulating in the circulating water circuit system by said dissolved oxygen removal device dependent upon a result of said comparison. To do so, preferably, a central controlling device being connected to the oxygen monitoring device is provided which is configured to receive a dissolved oxygen sensing signal from the oxygen monitoring device and which is configured to control the removal of the dissolved oxygen by the dissolved oxygen removal device based on the received dissolved oxygen sensing signal. The central controlling device can also control, if necessary, a vacuum generating device used for removing unreacted reducing agent from the dissolved oxygen removal device. The central controlling device can be configured to compare the physical and/or chemical quantity/quantities monitored by the oxygen monitoring device with the one or more set value(s) by using said received dissolved oxygen sensing signal and to start and/or to sustain said removal of dissolved oxygen from the water circulating in the circulating water circuit system by said dissolved oxygen removal device by switching the flow of water in the water through-flow pipe over to the bypass pipe and/or by letting the water flow through the bypass pipe of the water through-flow pipe dependent upon said result of said comparison. The central controlling device can be or can comprise a microcontroller.

Therefore, the removal of dissolved oxygen from the water circulating in the circulating water circuit system can be started and/or sustained by switching the water flow in the water through-flow pipe over to the bypass pipe part of said water through-flow pipe in which said dissolved oxygen removal device is arranged. Said switching over from a main pipe of the through-flow pipe (in which no removal of dissolved oxygen is performed) to said bypass pipe part can be done with the help of adequately arranged valves controlled by the aforementioned central controlling device.

Preferably, the predefined condition(s) is/are (a) threshold condition(s). That means that the comparing is performed by evaluating whether a monitored physical and/or chemical quantity (such as the concentration of dissolved oxygen in the water flowing in a through-flow pipe connecting for example the heat exchanger with the heat emitter) exceeds a predefined set value or not. If the monitored quantity exceeds this predefined set value, then the removal of dissolved oxygen is started, especially by switching over to the bypass. If the monitored quantity does not exceed the predefined set value, then the removal of dissolved oxygen (especially: the switching over from the main pipe to the bypass pipe) is not started.

The described evaluation (i.e. comparison with the threshold) can also be done in parallel with several monitored chemical and/or physical quantities. Then, if at least one of these measured and monitored (respectively) quantities exceed(s) a set value which has been predetermined for the said measured/monitored quantity, the removal of dissolved oxygen can be started. It is, however, also possible to start the removal of dissolved oxygen only if several or all of the monitored/measured quantities respectively exceed their corresponding predetermined set value.

Preferably, the set value(s), i.e. the threshold(s) can be set to zero: This means that the removal of dissolved oxygen is performed continuously without interruption, i.e. the whole time. This is specifically advantageous if one expects that a leak in one of the through-flow pipes of the circulating water circuit system occurs which leads to an undesired introduction of oxygen from the surrounding air into the water circuit system. However, thresholds > 0 can also be predefined so that the removal of dissolved oxygen will start only when the content of the dissolved oxygen in the system becomes too high. If a/the measured content of dissolved oxygen later on decreases below a/the predefined threshold > 0, the removal of dissolved oxygen can be stopped until a/the measured content of dissolved oxygen increases again and again exceeds the predefined threshold. Then, the removal can be started again.

The oxygen sensor can be arranged in or at the aforementioned water through-flow pipe. The oxygen sensor can be realized as a through-flow sensor which can be arranged in or at a water through-flow pipe connecting for example a heat exchanger (as in the exemplary embodiments) with a heat emitter (as in the exemplary embodiments). Specifically, this sensor can be arranged (seen in water-flowing direction) upstream of the dissolved oxygen removal device, but is preferably arranged downstream of the dissolved oxygen removal device. The operation principle and configuration of such oxygen sensors is well-known for the skilled person; for example the "ORBISPHERE A1100 Oxygen sensor" of Hach Lange or the "WQ401 Dissolved Oxygen Sensor" of Global Water can be used in the present invention.

Preferably, a water distribution means (for example a three-way valve) is arranged in said water through-flow pipe (preferably downstream of said bypass pipe) for branching this water through-flow pipe, downstream of said dissolved oxygen removal device, into a first branch being connected to said heat emitter and a second branch containing a water tank, preferably a hot water tank. The oxygen sensor is preferably arranged downstream of said bypass pipe and (if the aforementioned distribution means is present) upstream of the said three-way valve.

A heating device, preferably a heat pump, used for space heating and/or for hot water production, a boiler or a power station according to the invention are described in claim 12. Therein, the circulating water circuit system can be configured as a recirculating water circuit system configured to recirculate water multiple times.

Compared to the systems and methods known from the prior art, the present invention especially has the following advantages.

- The dissolving of the reducing agent (such as hydrogen) by using direct gas-water contact with intimate mixing (for example by using the/ an efficient microchannel contactor) is more efficient than the dissolving of the reducing agent in the prior art. This results in a high amount of reducing agent transfer in water which is then available to efficiently react with the oxygen radicals which are efficiently generated based on an electrical discharge such as the corona discharge. Consequently, an efficient recombination into water as a sink for the dissolved oxygen to be removed in the system under consideration is provided.

- The integration of several means and/or functions in one device allows a very compact design.

- In view of the importance of dissolved oxygen removal in many processes, the present invention can be usefully applied for the production of dissolved oxygen-free water in many situations such as in HVAC systems (heating, ventilation and air conditioning systems), boilers, power stations and so on.

- The present invention provides a system for efficiently dissolving the reducing agent in water, for efficiently generating oxygen radicals and for efficiently removing the/ any unreacted remaining reducing agent. Consequently, the invention provides a set of sequences leading to a high efficiency of the overall process for removal of dissolved oxygen from water.

- As hydrogen is used as the reducing agent, it is possible to get rid of the direct addition of chemical reducing reagents with toxicity problems (such as hydrazine or sodium sulphite).

Hereinafter, embodiments of the present invention are described in detail. Therein, specific components are described which can also be realized, within the scope of the invention as described by the claims, in a more general configuration.

Figure 1 shows the basic configuration of a first embodiment of a dissolved oxygen removal system according to the invention.

Figure 2 shows an embodiment of a recirculating water circuit system according to the invention which is configured for a controlled and/or intermittent removal of dissolved oxygen and in which an oxygen removal system according to the invention is used in the dissolved oxygen removal device of the recirculating water circuit system.

Figure 3 shows a control related detail of the system shown in Figure 2.

Figure 4 shows another embodiment of a recirculating water circuit system according to the invention which is configured for an uncontrolled, continuous removal of dissolved oxygen and in which an oxygen removal system according to the invention is used in the dissolved oxygen removal device of the recirculating water circuit system.

Figure 5 shows the detailed configuration of a second embodiment of a dissolved oxygen removal system according to the invention.

Figure 6 shows the basic configuration of the second embodiment of the dissolved oxygen removal system according to figure 5.

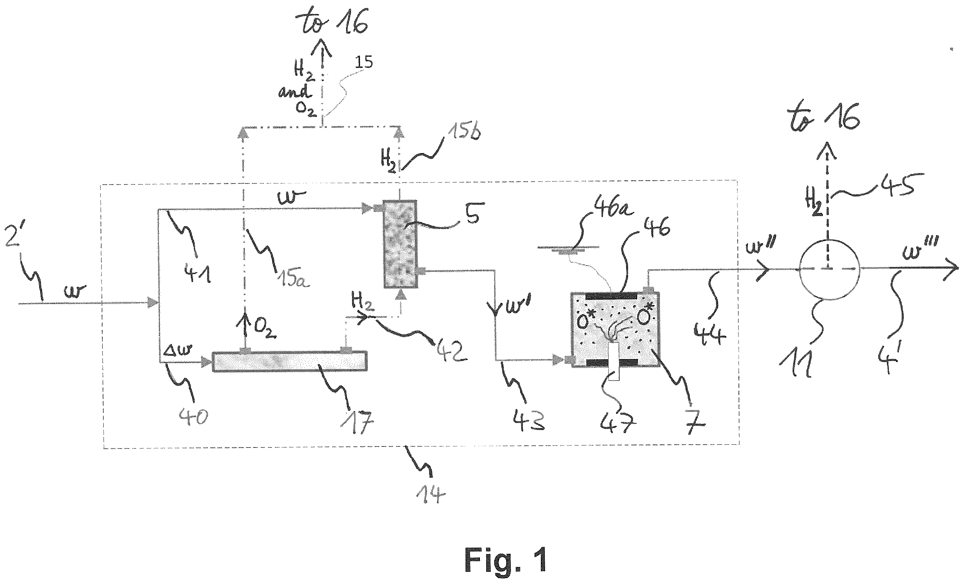

Figure 1 shows a dissolved oxygen removal device 14 in which a dissolved oxygen removal system (and therefore also a dissolved oxygen removal method) according to the invention is implemented. The untreated water w comprising dissolved oxygen enters the dissolved oxygen removal device, which is configured as a through-flow device, via the inlet pipe 2'. In the device 14, inlet pipe 2' branches into a first branch pipe 41 and a second branch pipe 40. Through the first branch pipe 41, a main part of the untreated water is conveyed into a microchannel gas-liquid contactor 5. The remaining part $\Delta w$ of the non-treated water w is conveyed through the second branch pipe 40 into a reducing agent generating device (which is a water electrolysis device 17) which is configured to generate hydrogen H via electrolysis of the water $\Delta w$.

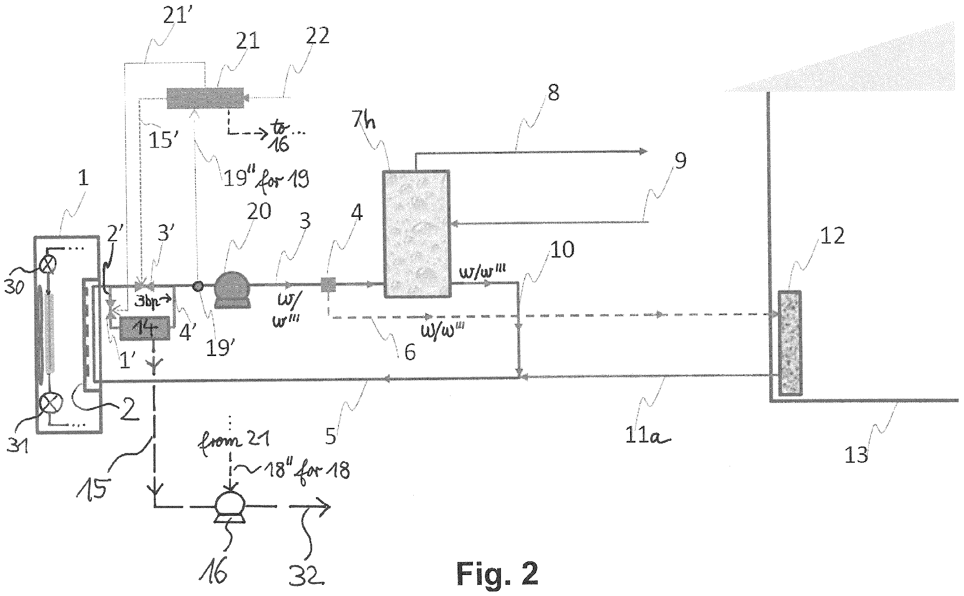

The first branch pipe 41 discharges the water w into a first inlet of the microchannel gas-liquid contactor 5, whereas the generated hydrogen is conveyed, via a gas-channel 42 into a second inlet of the microchannel gas-liquid contactor 5. Consequently, in the gas-liquid contactor 5, an efficient dissolving of hydrogen (as reducing agent) in water w takes place. The oxygen generated in the electrolysis device 17 is vented, via venting channel 15a, to a vacuum generating device in form of a vacuum pump 16 (see Figure 2). Also the non-dissolved hydrogen emanating from the through-flow microchannel gas-liquid contactor 5 is vented, via a venting channel 15b, to the said vacuum pump 16 (downstream of the devices 5 and 17, the two venting channels 15a and 15b unify into a single venting pipe 15 which is the venting pipe which connects the dissolved oxygen removal device 14 with the suction inlet of vacuum pump 16, compare Figure 2).

In the dissolved oxygen removal device 14, the outlet of the gas-liquid contactor 5 conveys the dissolved oxygen containing water w' in which hydrogen has been dissolved through the flow-channel 43 and an inlet of an electrical discharging device 7 into the latter. Discharging device 7 is realized as a corona discharge device in which oxygen radicals O* are generated with help of a peaked electrode 47 configured so as to generate the oxygen radicals in said water w'. 46 describes the second, plate-shaped electrode of the discharging device 7 which is connected to ground 46a.

The oxygen-containing water w" in which hydrogen has been dissolved and in which oxygen radicals have been generated is conveyed, via an outlet of the discharging device 7 and through discharging pipe 44 into the reducing agent removing device 11 of the dissolved oxygen removal device 14, in which device 11 is configured to remove the/ any unreacted hydrogen. For removal of the hydrogen gas $H_2$, the removal device 11 is connected, via another venting pipe 45, to the suction inlet of the vacuum pump 16. The water w''' in which hydrogen has been dissolved, in which oxygen radicals have been generated and in which the unreacted reducing agent hydrogen has been removed (and in which, therefore, the dissolved oxygen removal has been performed by reaction of the oxygen radicals with hydrogen to water) is discharged from the removal device 11 and therefore from the dissolved oxygen removal device 14 as treated water of reduced content of dissolved oxygen via the outlet pipe 4' of the dissolved oxygen removal device.

Consequently, the untreated water w is firstly transformed into hydrogen-rich water w' in gas-liquid contactor 5, then subjected to electrical discharge in reactor 7 in order to result in treated water with remaining unreacted hydrogen w" and finally transformed into treated water of reduced content of dissolved oxygen w''' in which the unreacted hydrogen has been removed.

Figure 2 shows a heat pump which comprises a recirculating water circuit system with a dissolved oxygen removal device as shown in Figure 1, i.e. according to the present invention. Those elements of the heat pump which relate to the refrigerant circuit (such as the expansion valve 30 and the compressor 31) are only adumbrated, but not described in detail as these elements are well-known for the skilled person.

The outdoor unit 1 of the heat pump (the housing of which encloses the extension valve 30 and the compressor 31) comprises the heat exchanger 2 which is adapted to produce hot water. This hot water w is fed into a hot water through-flow pipe 3 which connects the heat exchanger 2 with a heat emitter 12 which is the radiator of the indoor unit of the heat pump. In flowing direction of the hot water w from the heat exchanger 2 to the heat emitter 12, the following components of the recirculating water circuit system of the heat pump are arranged in the through-flow pipe 3: A first valve 3', downstream thereof an oxygen sensor 19', downstream thereof a water pump 20 and downstream thereof a three-way valve 4.

Seen in flowing direction from the heat exchanger 2 to the heat emitter 12, the three-way valve 4 branches the through-flow pipe 3 into two branches, a first branch 6 of the through-flow pipe 3 which connects the three-way valve 4 to the radiator 12 and a second branch 10 of the through-flow pipe 3 which leads to a hot water tank 7h. Consequently, by switching the three-way valve 4, hot water pumped by the pump 20 can either be conveyed to the radiator 12 being arranged in a living space 13 of a house (in order to heat this living space 13) via the first branch 6 or to the hot water tank 7h in the second branch 10. Therein, the hot water tank 7h is a through-flow tank so that the outflow of this tank 7h leads into a downstream portion of the second branch 10. This downstream portion discharges in a return water pipe 5 which connects the water outflow side of the heat emitter 12 with the water inflow side of the heat exchanger 2 (that is the return water pipe 5 is arranged to convey the cooled return water, which is depicted with the reference sign 11a, from the heat emitter 12 to the heat exchanger 2).

Therefore, the hot water w in the through-flow pipe 3 can be fed into the pipe of the second branch 10 and to the hot water tank 7h on the one hand and into the pipe of the first branch 6 and to the radiator emitter 12 inside the living space 13 on the other hand. The cooled return water 11a from the heat emitter 12 is mixed with the water of the pipe of the downstream portion of the second branch 10 (coming from the hot water tank 7h), resulting in mixed water flowing in pipe 5 to be returned to the heat exchanger 2.

Furthermore, hot water from tank 7h can be supplied to the living space 13 through a pipe 8 connecting the tank 7h with the living space 13 for utility purposes. From the water network, fresh water can be supplied to the hot water tank 7h through the additional pipe 9 (network water supply pipe).

A controlled and/or intermittent removal of dissolved oxygen according to the invention can be implemented as follows.

The recirculating water circuit system of Figure 2 further comprises a bypass pipe 3bp of the through-flow pipe 3 which is arranged so as to bypass the first valve 3' as follows. In hot water w flow-direction, this bypass pipe 3bp comprises a first T-junction of the pipe 3 (upstream of the first valve 3'), comprises, in the bypass around the first valve 3', the untreated water inlet pipe 2' of the dissolved oxygen removal device 14, comprises therein a second valve 1', comprises downstream of this second valve 1' the dissolved oxygen removal device 14 of Figure 1, and comprises downstream thereof the outlet pipe 4' of the dissolved oxygen removal device 14, the latter discharging, downstream of the first valve 3' and via a second T-junction, into the main pipe part of the water through-flow pipe 3.

According to the invention, the recirculating water circuit system of the heat pump further comprises the vacuum pump 16 and the central controlling device 21 (which is a microcontroller). The gas outlet of the dissolved oxygen removal device 14 (which is a water through-flow device) is connected via the venting pipe 15 to the suction side of the vacuum pump 16. Consequently, if the vacuum pump 16 is switched on (via the central controlling device 21, see below), a vacuum will be applied by pump 16 to the dissolved oxygen removal device 14 (for removing the unreacted reducing agent from said dissolved oxygen removal device through pipe 15 and through pipe 45 which is not shown here, compare Figure 1). The dissolved oxygen removal device 14 performs a removal of dissolved oxygen from the (hot) water w circulating in the recirculating water circuit system by conveying this water through the bypass 3bp. The removed gas can then be removed from pump 16 via its outlet pipe 32.

To control the removal of the dissolved oxygen from the water w, a control line 15' connects the central controlling device 21 with the first valve 3' in order to allow a control of the latter via the device 21. Also, another control line 21' connects the device 21 with the second valve 1' in order to control the latter via the device 21. A data line 19" connects the oxygen sensor 19' with the central controlling device 21: Via this data line 19", a dissolved oxygen sensing signal 19 which is determined by the oxygen sensor 19' can be input to the central controlling device 21 for further evaluation, i.e. comparison therewith (see below). Beyond that, another control line 18" connects the central controlling device 21 with the control of the vacuum pump 16: Via this control line 18", a control signal 18 from the central controlling device 21 can be input to the control of vacuum pump 16 in order to control pump 16 (for example to switch the operation of pump 16 on or to switch it off).

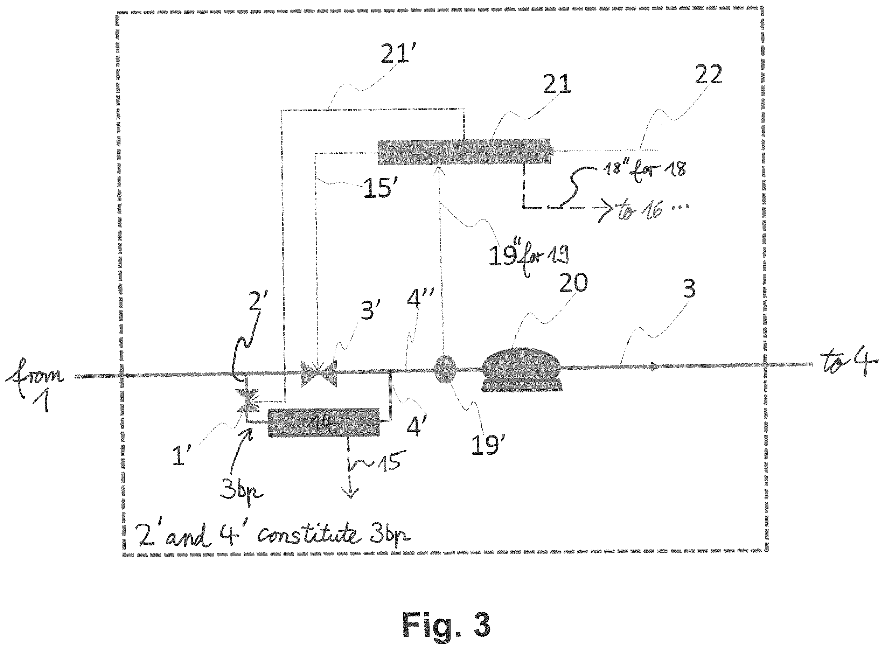

The hot water w from the heat exchanger 2 which is fed to the water through-flow pipe 3 contains undesired dissolved oxygen which is responsible for corrosion of major parts of the shown recirculating water circuit system (for example: corrosion in the heat exchanger 2 and the heat emitter 12) and which is also responsible for scale deposition in major parts (especially: in the through-flow pipe parts) of the system and for pipe clogging related therewith. Consequently, according to the invention, a dissolved oxygen removal operation control which is based on the dissolved oxygen content in the recirculating water circuit system can be performed as follows (see also Figure 3, which shows the detail of the water circuit according to Figure 2 showing the implementation of said control).

The concentration of the dissolved oxygen in the water w flowing in pipe 3 is monitored by the through-flow oxygen sensor 19'. From this concentration, a dissolved oxygen sensing signal 19 which characterizes this concentration is generated and sent via the data line 19" connecting the sensor 19' with the central controlling device 21 to the latter. In the microcontroller of central controlling device 21, sensing signal 19 is compared with a predefined set value 22 as follows. An electrical quantity E is calculated by the controlling device 21 according to

$$E = K \cdot (DO19' - SV22)$$

where DO19' denotes the value of a comparison signal which is based on dissolved oxygen sensing signal 19 and SV22 denotes the value of the predefined set value which characterizes a threshold for the concentration of dissolved oxygen in water w above which a dissolved oxygen removal is desired (SV22 is in general larger than 0, but can be also set to equal 0 if a continuous removal of dissolved oxygen is desired). K is the gain.

If E > 0, then a control signal 18 of "1" is transmitted via the control line 18" connecting the central controlling device 21 with the vacuum pump 16 to the vacuum pump 16 to switch it on. At the same time, a control signal is transmitted from the central controlling device 21 via control line 15' to first valve 3' (which is in an open state; the second valve 1' is in a closed state) in order to shut the first valve 3'. Beyond that and also at the same time, a further control signal is transmitted via the control line 21' from the central controlling device 21 to the second valve 1' in order to open the formerly closed second valve 1'. Consequently, the through-flow of water w through the bypass pipe 3bp starts, whereas the through-flow of water w through the main pipe of the water through-flow pipe 3 (said main pipe containing first valve 3') is switched off.

If, on the other hand, E ≤ 0 (or if, during a continuous monitoring by sensor 19' and due to the continuous removal of dissolved oxygen, E decreases to a value of 0 or below), a control signal 18 of "0" is sent from the device 21 to pump 16 in order to switch pump 16 off (or to keep pump 16 switched off). At the same time, further control signals are transmitted, via the control lines 15' and 21', to the two valves 1' and 3' in order to open (or re-open) the first valve 3' and to close (or re-close) the second valve 1' so that the bypass 3bp is shut off and the water w flows through the main pipe of the water through-flow pipe 3.

Consequently, as long as E > 0, a continuous removal of dissolved oxygen via bypass 3bp and dissolved oxygen removal device 14 therein is performed.

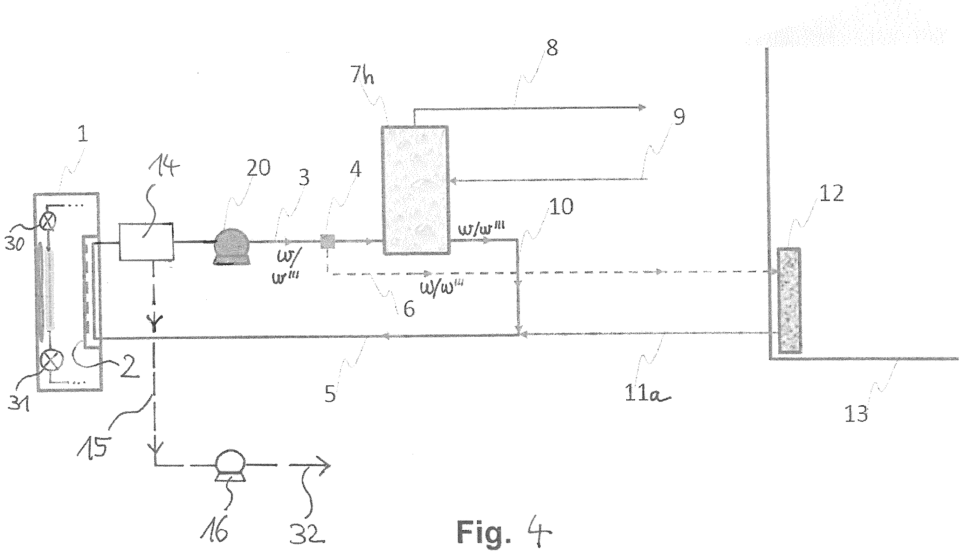

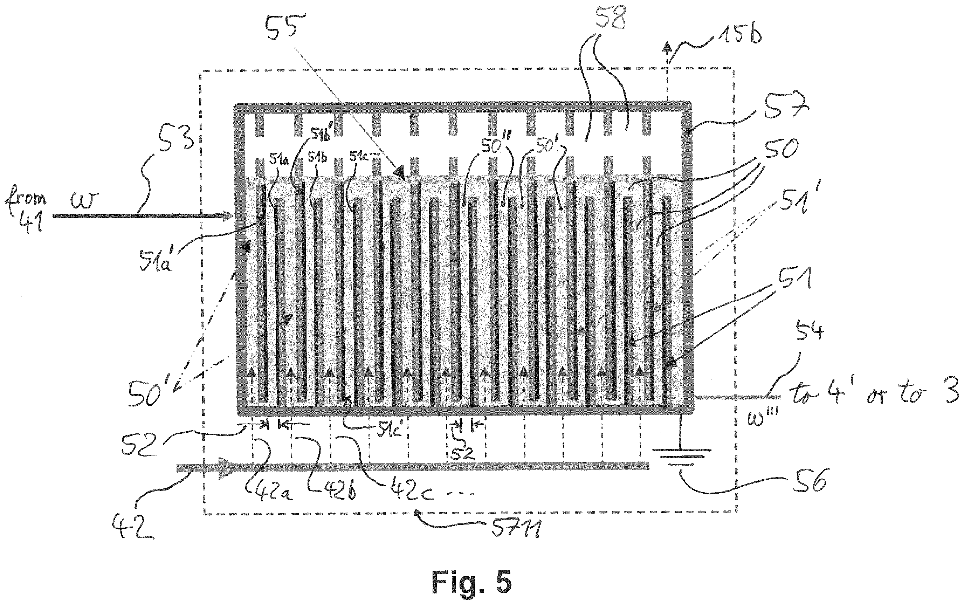

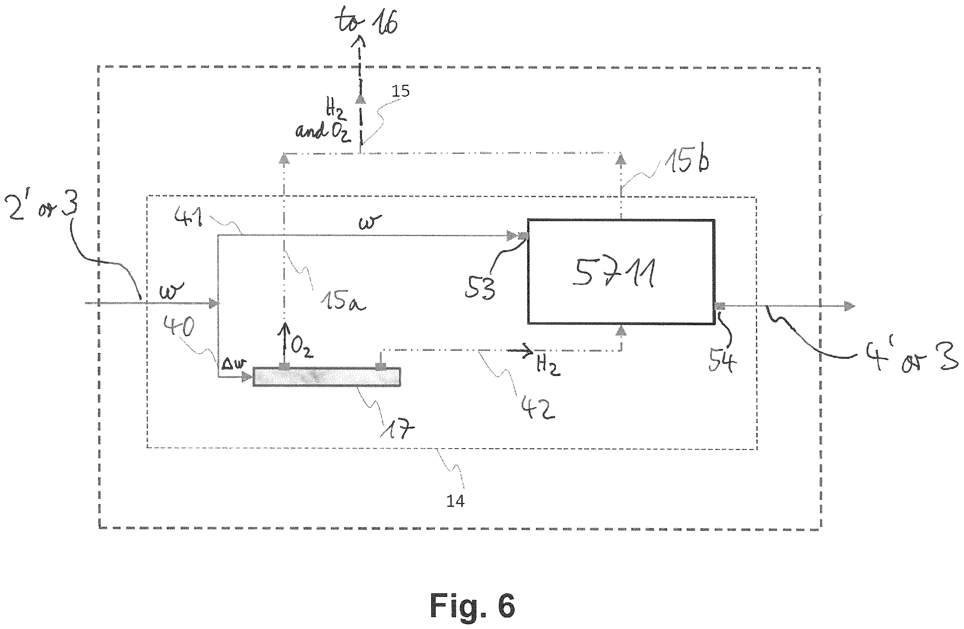

Figure 4 shows a recirculating water circuit system which is configured for an uncontrolled, continuous removal of dissolved oxygen and in which the oxygen removal system which is shown in fig. 1 (or an oxygen removal system according to figs. 5 and 6 described hereinafter) is used in the dissolved oxygen removal device thereof. The basic configuration is as described for fig. 2 so that only the differences are described hereinafter.

All control related elements (elements 1', 2', 3', 3bp, 4', 15', 18, 18", 19, 19', 19", 21, 21' and 22) are omitted.

Instead, the dissolved oxygen removal device is directly arranged as a through-flow device in the water through-flow pipe 3. Vacuum pump 16 is continuously operating, so that vacuum is continuously applied, via venting pipe 15, to dissolved oxygen removal device 14 to permanently remove the unreacted hydrogen. (Consequently, in its operation, this configuration equals the case of a threshold value < 0 for the configuration described in figs. 2 and 3.)

Figure 5 shows the detailed configuration of part of the dissolved oxygen removal system according to a second embodiment of the invention. Therein, the gas-liquid microchannel contactor means 5, the electrical discharging means 7 and the reducing agent removal means 11 are configured as one single, integrated device 5711 inside a single housing (not shown).

The integrated device 5711 comprises a container 57 which encloses a water through-flow space 50 and a reaction-free gas space 58 above the water through-flow space 50. In the water through-flow space 50, a plurality of electrode pairs 51, 51' configured for the application of a high voltage potential difference of for example between 10 kV and 100 kV and having a narrow gap 52 configuration are arranged. The electrodes 51, 51' are arranged parallel to each other and are plate-shaped. Their size is dependent on the operating conditions. The number of electrode pairs 51, 51' is also dependent on the operating conditions. Immediately adjacent electrodes of each pair (such as the electrode 51a' and the electrode 51a, such as the electrode 51b' and the electrode 51b or such as the electrode 51c' and the electrode 51c) have a very narrow gap size 52 for the interspace between their electrode plates of between 0.5 mm and 1.0 mm. This narrow gap allows an efficient generation of oxygen radicals O* from the dissolved oxygen contained in the inflowing (see below) water w due to the aforementioned high voltage difference between the electrodes. The electrodes 51 (such as the electrode 51a, the electrode 51b,...) are grounded 56, the electrodes 51' (such as the electrode 51a', the electrode 51b', ...) are connected with a not shown high voltage source to apply the high voltage. Thus, an alternate arrangement of a plurality of non-grounded and grounded electrodes providing in-between their plates a plurality of water w filled electrical discharge areas (compartments) 50" within the water through-flow space 50 is achieved.

The integrated device 5711 comprises in the upper part of one of its outer walls (here: its left side wall), a water inlet 53 (connected with first branch pipe 41) for feeding the water w containing dissolved oxygen into said water through-flow space 50. The fed water w flows in a meandering manner through the water through-flow space 50, i.e. through its different areas (compartments) 50' and 50" to the water outlet 54 (connected with the treated water outlet pipe 4' of the dissolved oxygen removal device - in the configuration according to fig. 2 - or with the water through-flow pipe 3 - in the configuration according to fig. 4) for discharging the water w''' (from which the dissolved oxygen has been removed) from said water through-flow space 50. The water outlet 54 is comprised in the lower part of a sidewall of device 5711 opposite to the aforementioned side wall (here: in its right side wall).

In flowing direction from inlet 53 to outlet 54, the water flows through a plurality of gas absorption compartments 50' (of water through-flow space 50) and through a plurality of electrical discharge compartments 50" (of water through-flow space). The gas absorption compartments 50' and the discharge compartments 50" are arranged in an alternate manner. In each gas absorption compartment 50', the water flows top down. In each electrical discharge compartment 50", the water flows bottom-up. In order to dissolve said reducing agent hydrogen in said water w by direct absorption in the gas absorption compartments 50' of water through-flow space 50 of said integrated device 5711, gas channel 42 (compare also fig. 6) comprises a gas distributor with a plurality of gas outlet channels (for example in form of nozzles) 42a, 42b, ... which discharge the hydrogen $H_2$ through the underside's outer wall of device 5711 into each of the gas absorption compartments 50' (but not into the electrical discharge compartments 50"), i.e. in the lower part of water through-flow space 50. Each gas outlet channel discharges precisely into one of the gas absorption compartments 50'.

In other words, the meandering water flow is as follows: Through inlet 53, top down through the first compartment which is a gas absorption compartment 50' (in which $H_2$ is introduced which then flows bottom-up through this compartment), bottom-up through the second compartment which is an electrical discharge compartment 50" (in which oxygen radicals are therefore generated due to the high voltage between electrodes 51a' and 51a of this compartment), top down through the third compartment which is again a gas absorption compartment 50', bottom-up through the fourth compartment which is again an electrical discharge compartment 50" and so on until it finally reaches outlet 54. Consequently, a counterflow absorption of the hydrogen in the water w containing dissolved oxygen in the gas absorption compartments 50' of water through-flow space 50 is realized. The water flow is initiated by sucking the water (via outlet 54) into the water pump 20 (compare figs. 2 and 4).

The removal of excessive, non-reacted hydrogen is performed as follows: The gaseous hydrogen ascends (due to its buoyancy in water and in opposition to the force of gravity direction), through the water flowing in the compartments 50' to the upper area of water through-flow space 50. This area is separated from the reaction-free gas space 58 lying above this area by the gas permeable, but water impermeable device 55 (for example: semi-permeable membrane). Thus, the unreacted hydrogen (but not the water w) penetrates through membrane 55 and therefore reaches the upper, water free venting area (space 58) above device 55, to which area a vacuum is applied by vacuum pump 16 to remove the/ any remaining, unreacted hydrogen from integrated device 5711 via venting channel 15b. In this manner, the integrated device 5711 is configured for counter-flow absorption of the gaseous hydrogen in the water containing dissolved oxygen. Here, water impermeable device 55 is used to prevent an undesired overflow of water in the upper,

9

venting area of the electrical discharge, while concurrently letting the rising, gaseous hydrogen penetrate through so that the vacuum pump 16 can remove this gaseous component.

Consequently, in the water flowing in the area 50 (below membrane 55), due to the aforementioned configuration (especially the applied high voltage and the narrow gap 52), an efficient dissolving of hydrogen by absorption, an efficient generation of oxygen radicals (and an efficient reaction of these radicals with the hydrogen to form $H_2O$) and an efficient removal of remaining gaseous constituents above the membrane 55 is realized.

Especially, the integrated device 5711 is also configured to remove, in the upper part of the container 57, i.e. in space 58, the unreacted reducing agent from the dissolved oxygen containing water w" in which said reducing agent has been dissolved (absorbed) and in which said oxygen radicals O* have been generated.

Figure 6 shows the basic configuration of the second embodiment of the dissolved oxygen removal system according to figure 5. The basic configuration is as described for fig. 1 so that only the differences are described hereinafter.

The formerly (fig. 1) separate devices 5, 7 and 11 of device 14 are integrated in one single apparatus 5711, so that flow-channel 43 is omitted. The venting pipe 45 and the venting channel 15b of fig. 1 are unified to one single venting channel 15b which is, on the one hand, in fluid connection with the venting side area of device 5711 and, on the other hand, with the suction side of vacuum pump 16 in order to remove the unreacted hydrogen. Dependent upon the usage of device 14 and its device 5711, respectively, in the embodiment of fig. 2 or in the one of fig. 4, the water inlet side of device 5711 is either (via first branch pipe 41) directly connected to pipe 3 or via untreated water inlet pipe 2' and valve 1' of bypass 3bp.

Reference sign list:

| | |
|---|---|
| 1 = | outdoor unit |
| 1' = | second valve |
| 2 = | heat exchanger |
| 2' = | untreated water inlet pipe of dissolved oxygen removal device |
| 3 = | water through-flow pipe |
| 3' = | first valve |
| 3bp = | bypass pipe |
| w = | untreated water |
| w' = | water with dissolved reducing agent |
| w" = | water with dissolved reducing agent and oxygen radicals |
| w''' = | treated water |
| Δw = | water for reducing agent generating device |
| 4 = | three-way valve |
| 4' = | treated water outlet pipe of dissolved oxygen removal device |
| 5 = | return water pipe |
| 6 = | hot water branch to heat emitter |
| 7 = | electrical discharging device |
| 7h = | hot water tank |
| 8 = | hot domestic water pipe to living space |
| 9 = | network water supply pipe |
| 10 = | second branch containing the hot water tank and leading from the three-way valve to the return water pipe |
| 11 = | reducing agent removing device |
| 11a = | return water from heat emitter |
| 12 = | heat emitter |
| 13 = | living space |
| 14 = | dissolved oxygen removal device |
| 15 = | venting pipe |
| 15' = | control line |
| 15a = | venting channel |
| 15b = | venting channel |
| 16 = | vacuum pump |
| 17 = | reducing agent generating device |
| 18 = | control signal |
| 18" = | control line |
| 19 = | dissolved oxygen sensing signal |

| 19' = | oxygen monitoring device |
|---|---|
| 19" = | data line |
| 20 = | water pump |
| 21 = | central controlling device |
| 22 = | set value |
| 30 = | expansion valve |
| 31 = | compressor |
| 32 = | outlet pipe of vacuum pump |
| 40 = | second branch pipe |
| 41 = | first branch pipe |
| 42 = | gas channel/ gas distributor with a plurality of gas outlet channels |
| 43 = | flow-channel |
| 44 = | discharging pipe |
| 45 = | another venting pipe |
| 46 = | plate-shaped electrode |
| 46a = | connection to earth |
| 47 = | discharge electrode |
| 50 = | water through-flow space |
| 50' = | gas absorption area in compartment of water through-flow space |
| 50" = | electrical discharge area in compartment of water through-flow space |
| 51 = | grounded electrode |
| 51' = | electrode with high voltage |
| 52 = | narrow gap |
| 53 = | water inlet |
| 54 = | water outlet |
| 55 = | semi-permeable device |
| 56 = | ground |
| 57 = | container |
| 58 = | reaction-free gas space |
| 5711 = | integrated device |

**Claims**

1. Dissolved oxygen removal system for removing dissolved oxygen from water (w) containing dissolved oxygen, comprising

   a gas-liquid contactor means (5) being configured to dissolve a reducing agent in said water (w) containing dissolved oxygen, and
   an electrical discharging means (7) being configured to generate oxygen radicals (O*) in the water (w) containing dissolved oxygen and/or in dissolved oxygen containing water (w') in which said reducing agent has been dissolved, wherein the gas-liquid contactor means (5) and the electrical discharging means (7) are configured as one single, integrated device that comprises a water through-flow space (50) in which at least one, preferably a plurality of electrode pair(s) (51, 51') being configured for the application of an electrical potential difference and having a narrow gap (52) configuration is/are arranged and wherein the integrated device is configured to feed (53) said water (w) containing dissolved oxygen into said water through-flow space (50), to dissolve, in said water through-flow space (50), said reducing agent in said water (w, w') containing dissolved oxygen, to generate, in said water through-flow space (50), said oxygen radicals (O*) in said water (w, w') containing dissolved oxygen, and to discharge (54) the water from said water through-flow space (50),

   *characterized by*

   further comprising a reducing agent generating device (17) being configured to generate said reducing agent to be dissolved in said water (w) containing dissolved oxygen,
   wherein said reducing agent generating device (17) is configured to generate hydrogen (H) by water electrolysis.

2. The dissolved oxygen removal system according to the preceding claim
   *characterized by*

further comprising a reducing agent removal means (11) being configured to remove unreacted amounts of said reducing agent from said dissolved oxygen containing water (w') in which said reducing agent has been dissolved and/or from said dissolved oxygen containing water (w") in which said reducing agent has been dissolved and in which said oxygen radicals (O*) have been generated.

3. The dissolved oxygen removal system according to claim 2
   **characterized in that**
   the gas-liquid contactor means (5), the electrical discharging means (7) and the reducing agent removal means (11) are configured as the one single, integrated device (5711).

4. The dissolved oxygen removal system according to the preceding claim
   **characterized in that**
   the integrated device is also configured to remove the unreacted amounts of said reducing agent from said dissolved oxygen containing water (w') in which said reducing agent has been dissolved and/or from said dissolved oxygen containing water (w") in which said reducing agent has been dissolved and in which said oxygen radicals (O*) have been generated.

5. The dissolved oxygen removal system according to one of the preceding claims
   **characterized in that**
   the integrated device is configured for a counterflow absorption of the gaseous reducing agent in the water (w) containing dissolved oxygen, wherein a configuration in which the gaseous reducing agent rises, through said water (w) containing dissolved oxygen, in opposition to the force of gravity is preferable.

6. The dissolved oxygen removal system according to one of the preceding claims,
   **characterized in that**

   said gas-liquid contactor means (5) is configured to dissolve hydrogen (H) as the reducing agent in said water (w) containing dissolved oxygen
   and/or
   **in that**, when referring back to claim 2, the reducing agent removal means (11) is configured for vacuum-based removal (16) of the unreacted amounts of the reducing agent.

7. The dissolved oxygen removal system according to one of the preceding claims
   **characterized by**
   a gas-liquid microchannel contactor means as the gas-liquid contactor means (5).

8. Circulating water circuit system with

   a dissolved oxygen removal device (14) comprising a dissolved oxygen removal system according to one of the preceding claims and being configured to remove dissolved oxygen from water (w) circulating in the circulating water circuit system,
   wherein the circulating water circuit system either
   comprises a vacuum generating device (16) being connected (15) to the dissolved oxygen removal device (14) and being configured to generate a vacuum and to apply it to the dissolved oxygen removal device (14) for removing (15b) unreacted reducing agent from said dissolved oxygen removal device (14)
   or
   is configured in such a manner that the electrical discharging means (7) of the dissolved oxygen removal system generates an amount of oxygen radicals (O*) which consumes the amount of reducing agent dissolved, by the gas-liquid contactor means (5) of the dissolved oxygen removal system, in said water (w) containing dissolved oxygen, and
   wherein the circulating water circuit system is either
   configured for an uncontrolled, continuous removal of dissolved oxygen from the water (w) containing dissolved oxygen
   or
   configured for a controlled and/or intermittent removal of dissolved oxygen from the water (w) containing dissolved oxygen.

9. The circulating water circuit system according to the preceding claim

*characterized in that*

the circulating water circuit system is configured for the controlled and/or intermittent removal and further comprises an oxygen monitoring device (19') being configured to monitor one or more physical and/or chemical quantity/quantities characterizing the content of dissolved oxygen in the water (w) circulating in the circulating water circuit system,
wherein the circulating water circuit system is configured to start and/or to sustain said removal of dissolved oxygen from the water (w) circulating in the circulating water circuit system when the one or more physical and/or chemical quantity/quantities monitored by the oxygen monitoring device (19') fulfil(s) one or more predefined conditions).

10. The circulating water circuit system according to the preceding claim
*characterized in that*
the oxygen monitoring device (19') comprises an oxygen sensor being configured to monitor the concentration of dissolved oxygen in the water (w) circulating in the recirculating water circuit system.

11. The circulating water circuit system according to one of the three preceding claims
*characterized in that*

the circulating water circuit system is configured for recirculating the water (w) and comprises:

a heat exchanger (2), preferably the heat exchanger of an outdoor unit (1) in case of a monoblock system or a hydrobox unit in case of a split system heat pump;
a heat emitter (12), preferably located in a living space to be heated; and
a water through-flow device (3), preferably a water through-flow pipe, connecting the heat exchanger (2) with the heat emitter (12), especially a hot water pipe adapted to convey hot water from the heat exchanger (2) to the heat emitter (12),

wherein the dissolved oxygen removal device (14) is arranged in or at said water through-flow pipe (3) and configured for removal of dissolved oxygen from water (w) flowing through said water through-flow pipe (3).

12. Heating device adapted for being used for space heating and/or for hot water production, boiler or power station
*characterized by*
comprising a circulating water circuit system according to one claims 8 to 11.

**Patentansprüche**

1. Gelöster-Sauerstoff-Entfernungssystem zum Entfernen von gelöstem Sauerstoff aus Wasser (w), enthaltend gelösten Sauerstoff, umfassend:

ein Gas-Flüssigkeit-Kontaktierungsmittel (5), das eingerichtet ist, ein Reduktionsmittel in dem Wasser (w), enthaltend gelösten Sauerstoff, zu lösen, und
ein elektrisches Entladungsmittel (7), das eingerichtet ist, Sauerstoffradikale (O*) in dem Wasser (w), enthaltend gelösten Sauerstoff, und/oder in gelösten Sauerstoff enthaltendem Wasser (w'), in dem das Reduktionsmittel gelöst wurde, zu erzeugen, wobei das Gas-Flüssigkeit-Kontaktierungsmittel (5) und das elektrische Entladungsmittel (7) als eine einzige, integrierte Einrichtung ausgebildet sind, die einen Wasserdurchflussraum (50) umfasst, in dem zumindest ein, vorzugsweise eine Vielzahl von Elektrodenpaar(en) (51, 51'), das/die für das Anlegen einer elektrischen Potentialdifferenz eingerichtet ist/sind und eine Engspaltkonfiguration (52) aufweist/aufweisen, angeordnet ist/sind, und wobei die integrierte Einrichtung eingerichtet ist, das Wasser (w), enthaltend gelösten Sauerstoff, in den Wasserdurchflussraum (50) einzuspeisen (53), um in dem Wasserdurchflussraum (50) das Reduktionsmittel in dem Wasser (w, w'), enthaltend gelösten Sauerstoff, zu lösen, um in dem Wasserdurchflussraum (50) die Sauerstoffradikale (O*) in dem Wasser (w, w'), enthaltend gelösten Sauerstoff, zu erzeugen, und das Wasser aus dem Wasserdurchflussraum (50) abzugeben (54),

*gekennzeichnet durch*

ferner umfassend eine Reduktionsmittel-Erzeugungseinrichtung (17), die eingerichtet ist, das Reduktionsmittel, das in dem Wasser (w), enthaltend gelösten Sauerstoff, zu lösen ist, zu erzeugen,
wobei die Reduktionsmittel-Erzeugungseinrichtung (17) eingerichtet ist, Wasserstoff (H) **durch** Wasserelektrolyse zu erzeugen.

2. Gelöster-Sauerstoff-Entfernungssystem nach dem vorangehenden Anspruch
*gekennzeichnet durch*
ferner umfassend ein Reduktionsmittel-Entfernungsmittel (11), das eingerichtet ist, nicht umgesetzte Mengen des Reduktionsmittels aus dem gelösten Sauerstoff enthaltendem Wasser (w'), in dem das Reduktionsmittel gelöst wurde, und/oder aus dem gelösten Sauerstoff enthaltendem Wasser (w"), in dem das Reduktionsmittel gelöst wurde und in dem die Sauerstoffradikale (O*) erzeugt wurden, zu entfernen.

3. Gelöster-Sauerstoff-Entfernungssystem nach Anspruch 2
*dadurch gekennzeichnet, dass*
das Gas-Flüssigkeit-Kontaktierungsmittel (5), die elektrische Entladungseinrichtung (7) und das Reduktionsmittel-Entfernungsmittel (11) als die eine einzige, integrierte Einrichtung (5711) ausgebildet sind.

4. Gelöster-Sauerstoff-Entfernungssystem nach dem vorangehenden Anspruch
*dadurch gekennzeichnet, dass*
die integrierte Einrichtung auch eingerichtet ist, die nicht umgesetzten Mengen des Reduktionsmittels aus dem gelösten Sauerstoff enthaltendem Wasser (w'), in dem das Reduktionsmittel gelöst wurde, und/oder aus dem gelösten Sauerstoff enthaltendem Wasser (w"), in dem das Reduktionsmittel gelöst wurde und in dem die Sauerstoffradikale (O*) erzeugt wurden, zu entfernen.

5. Gelöster-Sauerstoff-Entfernungssystem nach einem der vorangehenden Ansprüche
*dadurch gekennzeichnet, dass*

die integrierte Einrichtung für eine Gegenstrom-Absorption des gasförmigen Reduktionsmittels in dem Waser (w), enthaltend gelösten Sauerstoff, eingerichtet ist,
wobei eine Konfiguration, in der das gasförmige Reduktionsmittel durch das Wasser (w), enthaltend gelösten Sauerstoff, entgegen der Schwerkraft aufsteigt, zu bevorzugen ist.

6. Gelöster-Sauerstoff-Entfernungssystem nach einem der vorangehenden Ansprüche,
*dadurch gekennzeichnet, dass*

das Gas-Flüssigkeit-Kontaktierungsmittel (5) eingerichtet ist, Wasserstoff (H) als das Reduktionsmittel in dem Wasser (w), enthaltend gelösten Sauerstoff, zu lösen,
und/oder
dass mit Rückbezug auf Anspruch 2 das Reduktionsmittel-Entfernungsmittel (11) für eine vakuumbasierte Entfernung (16) der nicht umgesetzten Mengen des Reduktionsmittels ausgelegt ist.

7. Gelöster-Sauerstoff-Entfernungssystem nach einem der vorangehenden Ansprüche
*gekennzeichnet durch*
ein Gas-Flüssigkeit-Mikrokanal-Kontaktierungsmittel als das Gas-Flüssigkeit-Kontaktierungsmittel (5).

8. Zirkulierendes-Wasser-Kreislaufsystem mit

einer Gelöster-Sauerstoff-Entfernungseinrichtung (14), umfassend ein Gelöster-Sauerstoff-Entfernungssystem nach einem der vorangehenden Ansprüche und ausgelegt, gelösten Sauerstoff aus Wasser (w), zirkulierend in dem Zirkulierendes-Wasser-Kreislaufsystem, zu entfernen,
wobei das Zirkulierendes-Wasser-Kreislaufsystem entweder eine Vakuum-Erzeugungseinrichtung (16) umfasst, die mit der Gelöster-Sauerstoff-Entfernungseinrichtung (14) verbunden (15) ist und eingerichtet ist, ein Vakuum zu erzeugen und dieses an die Gelöster-Sauerstoff-Entfernungseinrichtung (14) zum Entfernen (15b) von nicht umgesetzten Reduktionsmittel aus der Gelöster-Sauerstoff-Entfernungseinrichtung (14) anzulegen,
oder
derart eingerichtet ist, dass das elektrische Entladungsmittel (7) des Gelöster-Sauerstoff-Entfernungssystems eine Menge an Sauerstoffradikalen (O*) erzeugt, die die Menge an gelöstem Reduktionsmittel verbraucht, durch das Gas-Flüssigkeit-Kontaktierungsmittel (5) des Gelöster-Sauerstoff-Entfernungssystems, in dem Wasser (w), enthaltend gelösten Sauerstoff, und

wobei das Zirkulierendes-Wasser-Kreislaufsystem entweder eingerichtet ist für eine ungesteuerte und/oder kontinuierliche Entfernung von gelöstem Sauerstoff aus dem Wasser (w), enthaltend gelösten Sauerstoff, oder

eingerichtet ist für eine gesteuerte und/oder intermittierende Entfernung von gelöstem Sauerstoff aus dem Wasser (w), enthaltend gelösten Sauerstoff.

9. Zirkulierendes-Wasser-Kreislaufsystem nach dem vorangehenden Anspruch
**dadurch gekennzeichnet, dass**

das Zirkulierendes-Wasser-Kreislaufsystem für die gesteuerte und/oder intermittierende Entfernung eingerichtet ist und ferner eine Sauerstoff-Überwachungseinrichtung (19') umfasst, die eingerichtet ist, eine oder mehrere physikalische und/oder chemische Größe(n), charakterisierend den Gehalt an gelöstem Sauerstoff in dem Wasser (w), zirkulierend in dem Zirkulierendes-Wasser-Kreislaufsystem, zu überwachen, wobei das Zirkulierendes-Wasser-Kreislaufsystem eingerichtet ist, die Entfernung von gelöstem Sauerstoff aus dem in dem Zirkulierendes-Wasser-Kreislaufsystem zirkulierenden Wasser (w) zu starten und/oder aufrechtzuerhalten, wenn die eine oder mehreren physikalische(n) und/oder chemische(n) Größe(n), die von der Sauerstoff-Überwachungsvorrichtung (19') überwacht wird/werden, eine oder mehrere vordefinierte Bedingung(en) erfüllt/erfüllen.

10. Zirkulierendes-Wasser-Kreislaufsystem nach dem vorangehenden Anspruch
**dadurch gekennzeichnet, dass**
die Sauerstoff-Überwachungseinrichtung (19') einen Sauerstoffsensor umfasst, der eingerichtet ist, die Konzentration von gelöstem Sauerstoff in dem Wasser (w), zirkulierend in dem Rezirkulierendes-Wasser-Kreislaufsystem, zu überwachen.

11. Zirkulierendes-Wasser-Kreislaufsystem nach einem der drei vorangehenden Ansprüche
**dadurch gekennzeichnet, dass**

das Zirkulierendes-Wasser-Kreislaufsystem zum Rezirkulieren des Wassers (w) eingerichtet ist und umfasst:

einen Wärmetauscher (2), vorzugsweise den Wärmetauscher einer Außeneinheit (1) im Falle eines Monoblock-Systems oder einer Hydrobox-Einheit im Falle einer Split-System-Wärmepumpe;
einen Wärmestrahler (12), der sich vorzugsweise in einem zu beheizenden Wohnraum befindet; und
eine Wasserdurchflusseinrichtung (3), vorzugsweise eine Wasserdurchflussleitung, verbindend den Wärmetauscher (2) mit dem Wärmestrahler (12), insbesondere eine Warmwasserleitung, die ausgelegt ist, Warmwasser von dem Wärmetauscher (2) zu dem Wärmestrahler (12) zu leiten,

wobei die Gelöst-Sauerstoff-Entfernungseinrichtung (14) in oder an der Wasserdurchflussleitung (3) angeordnet ist und eingerichtet ist zur Entfernung von gelöstem Sauerstoff aus dem durch die Wasserdurchflussleitung (3) fließenden Wasser (w).

12. Heizeinrichtung, die ausgelegt ist, zur Raumbeheizung und/oder zur Warmwasserbereitung, als Heizkessel oder als Kraftwerk genutzt zu werden,
**gekennzeichnet durch**
umfassen eines Zirkulierendes-Wasser-Kreislaufsystems nach einem der Ansprüche 8 bis 11.

**Revendications**

1. Système d'élimination de l'oxygène dissous pour éliminer l'oxygène dissous de l'eau (w) contenant de l'oxygène dissous, comprenant

un moyen de contacteur gaz-liquide (5) conçu pour dissoudre un agent réducteur dans ladite eau (w) contenant de l'oxygène dissous, et
un moyen de décharge électrique (7) conçu pour générer des radicaux d'oxygène (O*) dans l'eau (w) contenant de l'oxygène dissous et/ou dans de l''eau (w'') contenant de l''oxygène dissous dans laquelle ledit agent réducteur a été dissous, dans lequel le moyen de contacteur gaz-liquide (5) et le moyen de décharge électrique (7) sont conçus comme un seul dispositif intégré qui comprend un espace d'écoulement d'eau (50) dans lequel au moins une, et de préférence plusieurs, paire(s) d'électrodes (51, 51') conçue(s) pour l'application d'une différence de potentiel électrique et ayant une configuration d'espace étroit (52) est/sont agencée(s), et dans lequel le dispositif intégré est conçu pour alimenter (53) ladite eau (w) contenant de l'oxygène dissous dans ledit espace d'écoulement d'eau (50), pour dissoudre, dans ledit espace d'écoulement d'eau (50), ledit agent réducteur dans ladite eau (w, w') contenant de l'oxygène dissous, pour générer, dans ledit espace d'écoulement d'eau (50), lesdits radicaux d'oxygène (O*) dans ladite eau (w, w') contenant de l'oxygène dissous, et pour évacuer (54) l'eau dudit espace d'écoulement d'eau (50),

*caractérisé en ce qu'il*

comprend en outre un dispositif de génération d'agent réducteur (17) conçu pour générer ledit agent réducteur à dissoudre dans ladite eau (w) contenant de l'oxygène dissous,
dans lequel ledit dispositif de génération d'agent réducteur (17) est conçu pour générer de l'hydrogène (H) par électrolyse de l'eau.

2. Système d'élimination de l'oxygène dissous selon la revendication précédente
*caractérisé en ce qu'il*
comprend en outre un moyen d'élimination de l'agent réducteur (11) conçu pour éliminer les quantités n'ayant pas réagi dudit agent réducteur de ladite eau (w') contenant de l'oxygène dissous dans laquelle ledit agent réducteur a été dissous et/ou de ladite eau (w") contenant de l'oxygène dissous dans laquelle ledit agent réducteur a été dissous et dans laquelle lesdits radicaux d'oxygène (O*) ont été générés.

3. Système d'élimination de l'oxygène dissous selon la revendication 2
*caractérisé en ce que*
le moyen de contacteur gaz-liquide (5), le moyen de décharge électrique (7) et le moyen d'élimination de l'agent réducteur (11) sont conçus comme un seul dispositif intégré (5711).

4. Système d'élimination de l'oxygène dissous selon la revendication précédente
*caractérisé en ce que*
le dispositif intégré est également conçu pour éliminer les quantités n'ayant pas réagi dudit agent réducteur de ladite eau (w') contenant de l'oxygène dissous dans laquelle ledit agent réducteur a été dissous et/ou de ladite eau (w") contenant de l'oxygène dissous dans laquelle ledit agent réducteur a été dissous et dans laquelle lesdits radicaux d'oxygène (O*) ont été générés.

5. Système d'élimination de l'oxygène dissous selon l'une des revendications précédentes
*caractérisé en ce que*

le dispositif intégré est conçu pour une absorption à contre-courant de l'agent réducteur gazeux dans l'eau (w) contenant de l'oxygène dissous,
dans lequel une configuration dans laquelle l'agent réducteur gazeux monte, à travers ladite eau (w) contenant de l'oxygène dissous, en opposition à la force de gravité est préférable.

6. Système d'élimination de l'oxygène dissous selon l'une des revendications précédentes,
*caractérisé en ce que*

ledit moyen de contacteur gaz-liquide (5) est conçu pour dissoudre l'hydrogène (H) comme agent réducteur dans ladite eau (w) contenant de l'oxygène dissous
et/ou
**en ce que**, en se référant à nouveau à la revendication 2, le moyen d'élimination de l'agent réducteur (11) est conçu pour une élimination sous vide (16) des quantités de l'agent réducteur n'ayant pas réagi.

7. Système d'élimination de l'oxygène dissous selon l'une des revendications précédentes
*caractérisé par*
un moyen de contacteur gaz-liquide à microcanaux comme moyen de contacteur gaz-liquide (5).

8. Système de circuit d'eau de circulation avec

un dispositif d'élimination de l'oxygène dissous (14) comprenant un système d'élimination de l'oxygène dissous selon l'une des revendications précédentes et étant conçu pour éliminer l'oxygène dissous de l'eau (w) circulant dans le système de circuit d'eau de circulation,

dans lequel le système de circuit d'eau de circulation soit comprend un dispositif de production de vide (16) relié (15) au dispositif d'élimination de l'oxygène dissous (14) et conçu pour produire du vide et l'appliquer au dispositif d'élimination de l'oxygène dissous (14) pour éliminer (15b) l'agent réducteur n'ayant pas réagi dudit dispositif d'élimination de l'oxygène dissous (14)

soit

est conçu de telle manière que le moyen de décharge électrique (7) du système d'élimination de l'oxygène dissous génère une quantité de radicaux d'oxygène (O*) qui consomme la quantité d'agent réducteur dissous, à l'aide du moyen de contacteur gaz-liquide (5) du système d'élimination de l'oxygène dissous, dans ladite eau (w) contenant de l'oxygène dissous, et

le système de circuit d'eau de circulation étant soit

conçu pour une élimination incontrôlée et continue de l'oxygène dissous de l'eau (w) contenant de l'oxygène dissous

soit

conçu pour une élimination contrôlée et/ou intermittente de l'oxygène dissous de l'eau (w) contenant de l'oxygène dissous.

9. Système de circuit d'eau de circulation selon la revendication précédente
   **caractérisé en ce que**

   le système de circuit d'eau de circulation est conçu pour l'élimination contrôlée et/ou intermittente et comprend en outre un dispositif de surveillance de l'oxygène (19') conçu pour surveiller une ou plusieurs quantité(s) physique(s) et/ou chimique(s) caractérisant la teneur en oxygène dissous dans l'eau (w) circulant dans le système de circuit d'eau de circulation,
   le système de circuit d'eau de circulation étant conçu pour commencer et/ou pour poursuivre ladite élimination de l'oxygène dissous de l'eau (w) circulant dans le système de circuit d'eau de circulation lorsque la ou les quantité(s) physique(s) et/ou chimique(s) surveillée(s) par le dispositif de surveillance de l'oxygène (19') remplit/remplissent une ou plusieurs condition(s) prédéfinie(s).

10. Système de circuit d'eau de circulation selon la revendication précédente
    **caractérisé en ce que**
    le dispositif de surveillance de l'oxygène (19') comprend un capteur d'oxygène conçu pour surveiller la concentration d'oxygène dissous dans l'eau (w) circulant dans le système de circuit d'eau de recirculation.

11. Système de circuit d'eau de circulation selon l'une des trois revendications précédentes
    **caractérisé en ce que**

    le système de circuit d'eau de circulation est conçu pour faire recirculer l'eau (w) et comprend :

    un échangeur de chaleur (2), de préférence l'échangeur de chaleur d'une unité extérieure dans le cas d'un système monobloc ou d'une unité hydrobox dans le cas d'une pompe à chaleur bi-bloc ;
    un émetteur de chaleur (12), situé de préférence dans un espace de vie à chauffer ; et
    un dispositif d'écoulement d'eau (3), de préférence un tuyau d'écoulement d'eau, reliant l'échangeur de chaleur (2) à l'émetteur de chaleur (12), en particulier un tuyau d'eau chaude conçu pour transporter l'eau chaude de l'échangeur de chaleur (2) à l'émetteur de chaleur (12),

    dans lequel le dispositif d'élimination de l'oxygène dissous (14) est agencé dans ledit tuyau d'écoulement d'eau (3), ou au niveau de celui-ci, et conçu pour l'élimination de l'oxygène dissous de l'eau (w) s'écoulant à travers ledit tuyau d'écoulement d'eau (3).

12. Dispositif de chauffage, conçu pour être utilisé pour le chauffage des locaux et/ou pour la production d'eau chaude, chaudière ou centrale électrique
    **caractérisé en ce qu'il**
    comprend un système de circuit d'eau de circulation selon l'une des revendications 8 à 11.

EP 2 873 648 B1

**Fig. 1**

Fig. 2

Fig. 3

EP 2 873 648 B1

Fig. 4

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2308744 C
- US 5244600 A
- US 4789488 A

**Non-patent literature cited in the description**

- **J. YUE.** *Chemical Engineering Science,* 2007, vol. 62, 2096-2108
- **F.O. BAIER.** Mass transfer characteristics of a novel gas-liquid contactor, the advanced buss loop reactor. Swiss Federal Institute of Technology, 2001
- **B. SUN et al.** The Study of Atomic Oxygen produced by a pulsed Streamer Corona Discharge in Water. *AP-AWTGORT,* 2006
- **TAKUYA BANNO.** Decomposition of Methylene Blue by the Plasma Discharge in Water solution - Discharge Mode and Catalyst Effect. Tokyo Univ. Elec. Eng. Dept, 2013